# EUROPÄISCHE PATENTSCHRIFT

(11) **EP 2 954 201 B1**
(45) Veröffentlichungstag und Bekanntmachung des Hinweises auf die Patenterteilung: **22.05.2019**
(21) Anmeldenummer: 14702523.3
(22) Anmeldetag: 29.01.2014
(51) Int. Cl.: F03D 7/04, F03D 1/06

(54) **WIND- ODER WASSERKRAFTMASCHINE SOWIE KRAFTMASCHINENPARK**
WIND POWERED GENERATOR OR WATER POWERED GENERATOR AND POWER GENERATOR POOL
AÉROGÉNÉRATEUR OU GÉNÉRATEUR HYDRAULIQUE ET PARC DE MACHINES MOTRICES

(30) Priorität: 07.02.2013 DE 102013002054
(43) Veröffentlichungstag der Anmeldung: 16.12.2015
(73) Patentinhaber: Voith Patent GmbH, 89522 Heidenheim (DE)
(72) Erfinder: SOMMERKORN, Klaus, 89518 Heidenheim (DE)
(74) Vertreter: Dr. Weitzel & Partner
(86) Internationale Anmeldenummer: PCT/EP2014/051668
(87) Internationale Veröffentlichungsnummer: WO 2014/122050

(56) Entgegenhaltungen:
- EP-A1- 2 757 255
- EP-A2- 1 674 723
- WO-A1-00/15961
- US-A1- 2009 226 296
- US-A1- 2010 068 058
- US-A1- 2012 133 138

## Beschreibung

Die vorliegende Erfindung betrifft einen Kraftmaschinenpark mit einer Vielzahl von als Wind- oder Wasserkraftmaschinen ausgeführten Kraftmaschinen.

Ein Kraftmaschinenpark ist beispielsweise aus der Patentschrift US 2012/133138 bekannt.

Wind- oder Wasserkraftmaschinen werden seit langem zur Stromerzeugung herangezogen. Derartige Kraftmaschinen umfassen dabei üblicherweise einen Rotor, der eine Nabe und wenigstens ein daran befestigtes Rotorblatt aufweist. Nabe und Rotorblatt sind drehfest ausgeführt. Wird der Rotor von dem Medium, beispielsweise Wind oder Wasser, angeströmt, dreht er sich um seine Drehachse. Der Rotor entnimmt der Mediumströmung kinetische Energie. Die entnommene Energie wird dann üblicherweise mittels eines Generators in elektrische Energie umgewandelt. Die vorliegende Erfindung betrifft eine solche gattungsgemäße Kraftmaschine.

Durch die Umströmung des Rotors wird die Geschwindigkeit des Mediums entsprechend der Energieentnahme reduziert. Dies geschieht beim "Hindurchtreten" des Mediums durch die Rotordrehebene beziehungsweise durch den vom Rotor bei dessen Drehung überstrichenen Raum. Damit fällt die Geschwindigkeit des Mediums ab - in Strömungsrichtung gesehen hinter dem Rotor (Leeseite). Unter dem Begriff "Leeseite" wird somit die Abströmseite eines Rotors einer Kraftmaschine verstanden. Der Begriff "Luvseite" bezeichnet hingegen die Anströmseite des Rotors. Auf der Leeseite des Rotors einer Kraftmaschine bildet sich ein sogenannter Nachlaufbereich aus. Letzterer ist neben der verminderten Mediumgeschwindigkeit zusätzlich durch eine starke Verwirbelung seiner Strömung charakterisiert. Besonders große Verwirbelungen treten dabei im radial äußeren Bereich der Rotorblätter auf. Es bildet sich dort ein Wirbelzopf aus. Jede Kraftmaschine weist als Strömungsmaschine dabei einen solchen charakteristischen Nachlaufbereich auf.

Besonders nachteilig wirkt sich der Nachlaufbereich aus, wenn mehrere solcher Kraftmaschinen in Strömungsrichtung des Mediums zu einem Kraftmaschinenpark hintereinander geschaltet werden. So nimmt beispielsweise die Geschwindigkeit des durch die Rotordrehebene hindurchgetretenen Mediums einer ersten Kraftmaschine in der leeseitigen Nachlaufströmung langsam mit zunehmendem Abstand vom Rotor in Hauptströmungsrichtung wieder zu. Erst wenn die Geschwindigkeit wieder auf einen bestimmten Wert angewachsen ist, kann die in Hauptströmungsrichtung unmittelbar darauffolgende Kraftmaschine energieeffizient angeströmt werden. Daraus ergibt sich, dass ein gewisser Mindestabstand zwischen zwei in Hauptströmungsrichtung unmittelbar oder versetzt aufeinanderfolgenden Kraftmaschinen eingehalten werden muss, damit eine hohe Energieeffizienz des Kraftmaschinenparks erreicht werden kann.

Je größer jedoch der Abstand der Kraftmaschinen insbesondere in Hauptströmungsrichtung untereinander ist, desto größer ist auch die benötigte Aufstellfläche für den Kraftmaschinenpark. Zudem steigt mit zunehmendem Abstand der Kraftmaschinen untereinander auch der Aufwand für die Verkabelung dieser. So steigen die Anbindungskosten eines elektrischen Netzes, welches die Generatoren der Kraftmaschinen zur Einspeisung der erzeugten elektrischen Arbeit mit einem Versorgungsnetz verbindet, erheblich an, je weiter die Anlagen voneinander entfernt stehen.

Der Erfindung liegt demnach die Aufgabe zugrunde, eine Wind- oder Wasserkraftmaschine sowie einen Kraftmaschinenpark anzugeben, welche die Nachteile des Standes der Technik vermeiden. Insbesondere soll eine Reduzierung der Aufstellfläche bei im Wesentlichen gleichbleibender oder gar höherer Energieeffizienz des Kraftmaschinenparks erreicht werden. Ferner sollen die Anbindungskosten eines elektrischen Netzes eines solchen Kraftmaschinenparks an ein Versorgungsnetz erheblich reduziert werden.

Die erfindungsgemäße Aufgabe wird durch eine Wind- oder Wasserkraftmaschine mit den Merkmalen des Patentanspruches gelöst.

Eine erfindungsgemäße Wind- oder Wasserkraftmaschine umfasst einen Rotor mit einer Nabe und wenigstens ein daran befestigtes Rotorblatt. Das wenigstens eine Rotorblatt weist im Bereich seiner Rotorblattspitze eine Einrichtung zur Beeinflussung des das Rotorblatt umströmenden Mediums auf. Erfindungsgemäß ist die Einrichtung zur Beeinflussung derart eingerichtet, dass sie im radial äußeren Bereich des Rotorblatts eine gezielte Zunahme der Verwirbelung des Mediums bewirkt.

Die erfindungsgemäße Einrichtung ist nach Art von Endscheiben (optional auch von sogenannten Winglets, welche in der vorliegenden Erfindung nicht enthalten sind) ausgebildet, welche mit ihrer Längsachse senkrecht oder winklig zur Längsachse des Rotorblatts stehen. Herkömmliche Endscheiben oder Winglets dienen dazu, einen sich an der Rotorblattkante ausbildenden Wirbel lediglich zu zerteilen oder zu reduzieren. Dabei bleibt die Gesamtstärke des Wirbels stets gleich. Im Gegensatz dazu wird gemäß der Erfindung die Gesamtstärke des Wirbels und insbesondere die Anzahl der Wirbel sowie deren Energie gezielt erhöht. In anderen Worten wird im radial äußeren oder äußersten Bereich des oder der Rotorblätter eine zu den herkömmlich auftretenden Verwirbelungen des Rotorblatts zusätzliche Turbulenz herbeigeführt, die es ohne die erfindungsgemäße Einrichtung zur Beeinflussung nicht gäbe. Die Energie und die Stärke der Einzelwirbel des Wirbelzopfs in der Nachlaufströmung der jeweiligen Kraftmaschine werden dadurch erhöht.

Ein erfindungsgemäßer Kraftmaschinenpark, wie Windpark oder Unterwasserpark, umfasst eine Vielzahl von Kraftmaschinen, die jeweils einen Generator aufweisen. Ferner ist ein elektrisches Netz vorgesehen, welches die Generatoren der Kraftmaschinen zur Einspeisung der erzeugten elektrischen Energie in ein Versorgungsnetz miteinander verbindet. Dabei sind die Kraftmaschinen in Hauptströmungsrichtung des Mediums und quer dazu benachbart angeordnet, um dem Medium gleichzeitig Energie zu entnehmen. Dabei sind die Kraftmaschinen als Wind- oder Wasserkraftmaschinen gemäß der Erfindung ausgeführt.

Herkömmlich erfolgt der Geschwindigkeitsausgleich im Nachlauf hinter einer jeden Kraftmaschine durch turbulenz- und reibungsgetriebene Impulsübertragung zwischen der sich im Umfeld um den Rotor befindlichen Mediumströmung und der Nachlaufströmung. Durch die Impulsübertragung wird von radial außen beginnend die Geschwindigkeit im Nachlaufbereich mit zunehmenden Abstand vom Rotor in Hauptströmungsrichtung wieder erhöht.

Durch die erfindungsgemäße gezielte Zunahme der Verwirbelung wird der Geschwindigkeitsausgleich zwischen dem Wirbelzopf und dem den Rotor umgebenden Medium einer jeden Kraftmaschine schneller als herkömmlich erzielt. Der Geschwindigkeitsausgleich im Nachlaufbereich jeder Kraftmaschine wird dadurch beschleunigt, dass insbesondere der turbulente Anteil des Impulsübertrags durch die zusätzliche Verwirbelung erhöht wird. Damit erreicht die leeseitige Mediumströmung nach dem Hindurchtreten durch die Rotordrehebene schneller den zur Anströmung der nachgelagerten Kraftmaschine benötigten Geschwindigkeitswert. Die Erstreckung des Nachlaufbereichs einer solchen Kraftmaschine in Hauptströmungsrichtung des Mediums reduziert sich. Damit kann der Abstand zweier aufeinanderfolgenden Kraftmaschinen in einem Kraftmaschinenpark in Hauptströmungsrichtung erheblich verringert werden. Die Kraftmaschinen können nun in Hauptströmungsrichtung gesehen näher aneinander angeordnet werden. Auf derselben Aufstellfläche finden damit mehr Kraftmaschinen Platz als dies bei herkömmlichen Anlagen der Fall ist. Gleichzeitig wird auch der Aufwand für die Verkabelung des Kraftmaschinenparks reduziert.

Die Erfindung ist anhand eines Ausführungsbeispiels exemplarisch beschrieben.

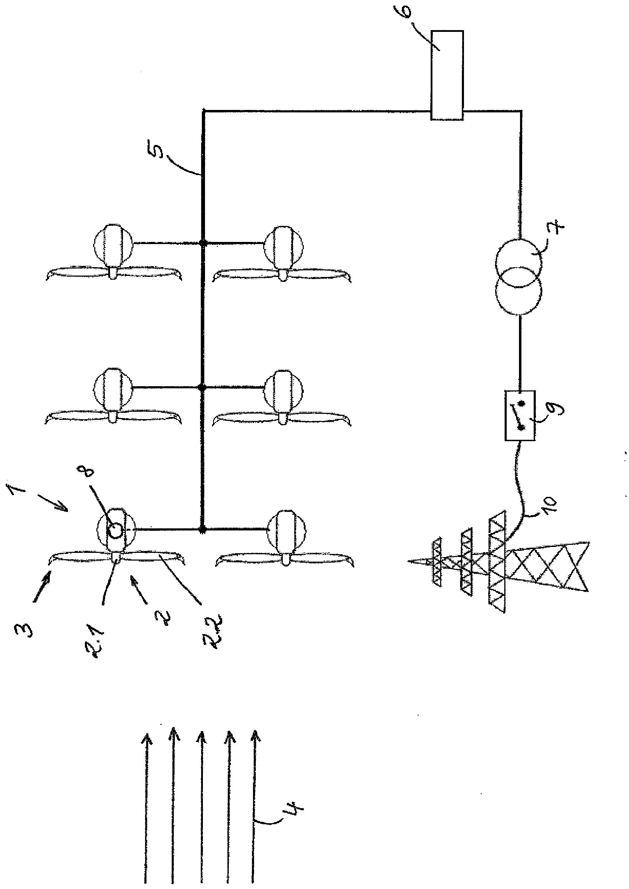

In der Figur ist ein Kraftmaschinenpark mit einer Vielzahl von Wind- oder Wasserkraftmaschinen 1 in einer Draufsicht schematisch dargestellt. Jede der dargestellten Kraftmaschinen umfasst vorliegend einen Rotor 2 mit einer Nabe 2.1, an den hier zwei Rotorblätter 2.2 befestigt sind und mit der Nabe 2.1 zusammen umlaufen. Auch wären mehr oder weniger als zwei Rotorblätter 2.2 denkbar. Rotor 2 ist an einen Generator 8 angeschlossen oder anschließbar, um der Mediumströmung kinetisch Energie zu entziehen und diese in elektrische Energie umzuwandeln. Vorliegend ist die Drehachse des Rotors horizontal angeordnet. Auch eine vertikale Anordnung der Drehachse wäre jedoch denkbar. Dann wären die Rotorblätter 2.2 in ihrer Form entsprechend an den Einsatzfall angepasst.

Im radial äußeren Bereich eines jeden Rotorblatts 2.2 einer jeden Turbine 2 ist an der Rotorblattspitze eine Einrichtung zur Beeinflussung 3 des das Rotorblatt 2.2 umströmenden Mediums angeordnet. Einrichtung 3 kann beispielsweise nach Art von Endscheiben oder Winglets ausgebildet sein, welche mit ihrer Längsachse senkrecht oder winklig zur Längsachse des Rotorblatts 2.2 stehen. Einrichtung 3 dient dabei zu einer gezielten Verwirbelung des sich im Bereich der Rotorblattspitzen bildenden Wirbelzopfes. Sie vergrößert die Gesamtgröße des Wirbelzopfes, und erreicht eine schnellere turbulenz- und impulsgetriebene Geschwindigkeitszunahme des vom Rotor leeseitig abströmenden Mediums. Durch diese Einrichtung 3 können die weiteren in Hauptströmungsrichtung 4 nachgelagerten Wind- oder Wasserkraftmaschinen 1 näher aneinander angeordnet werden.

In der Figur umfasst der dargestellte Kraftmaschinenpark zwei Gruppen von quer (normal) zur Hauptströmungsrichtung 4 des Mediums angeordneten hintereinander geschalteten Wind- oder Wasserkraftmaschinen 1. Die dargestellte Anzahl und Anordnung ist jedoch für die vorliegende Erfindung nicht zwingend notwendig.

Die Wind- oder Wasserkraftmaschinen 1, genauer gesagt deren Generatoren, von denen nur ein einziger symbolisch dargestellt und mit 8 bezeichnet ist, sind über elektrische Leitungen zu einem elektrischen Netz 5 elektrisch miteinander verbunden. Im dargestellten Fall ist das elektrische Netz 5 nach Art eines Sternennetzes ausgebildet. Es könnten auch andere Netzgeometrien vorgesehen sein, zum Beispiel von Anlagen einzeln oder in Gruppen. Das elektrische Netz 5 ist an eine Steuereinrichtung 6 angeschlossen, welche dessen elektrische Leistung steuert oder regelt.

Die Generatoren der Wind- oder Wasserkraftmaschinen 1 können über nicht dargestellte Steuerleitungen mit der Steuereinrichtung 6 zur Steuerung oder Regelung der elektrischen Leistung verbunden sein. Dem elektrischen Netz 5 ist üblicherweise weiter ein Transformator 7 zugeordnet, welcher hier der Steuereinrichtung 6 nachgeschaltet ist und mittels welchem das Spannungsniveau des elektrischen Netzes 5 oder Einzelanlagen und damit das Spannungsniveau der Generatoren 8 der Wind- oder Wasserkraftmaschinen 1 auf das Spannungsniveau eines elektrischen Versorgungsnetzes 10 angehoben werden kann. Versorgungsnetz 10 kann beispielsweise ein elektrisches Versorgungsnetz eines regionalen oder überregionalen elektrischen Energieversorgers sein.

Ferner ist ein Netzeinspeisepunkt 9 dargestellt. Letzterer ist hier lediglich durch eine Schalteinrichtung angedeutet. Im Bereich des Netzeinspeisepunktes 9 wird die von den Generatoren der Wind- oder Wasserkraftmaschinen 1 erzeugte und über das elektrische Netz 5 gesammelte elektrische Leistung an das elektrische Versorgungsnetz 10 übergeben. Die Erfindung lässt sich anwenden bei einem Rotor mit horizontal angeordneter Drehachse, aber auch mit Drehachsen, die gegen die horizontale Drehachse geneigt oder vertikal verlaufen.

### Bezugszeichen liste

- 1: Wind- oder Wasserkraftmaschine
- 2: Rotor
- 2.1: Nabe
- 2.2: Rotorblatt
- 3: Einrichtung zur Beeinflussung
- 4: Hauptströmungsrichtung
- 5: elektrisches Netz
- 6: Steuereinrichtung
- 7: Transformator
- 8: Generator
- 9: Netzanschluss
- 10: elektrisches Versorgungsnetz

## Patentansprüche

1. Kraftmaschinenpark
1.1 mit einer Vielzahl von Kraftmaschinen, die jeweils einen Generator (8) aufweisen;
1.2 mit einem elektrischen Netz (5), welches die Generatoren (8) der Kraftmaschinen zur Einspeisung der erzeugten elektrischen Arbeit in ein Versorgungsnetz (10) miteinander verbindet; wobei
1.3 die Kraftmaschinen in Strömungsrichtung des Mediums und quer dazu benachbart angeordnet sind, um dem Medium gleichzeitig Energie zu entnehmen;
1.4 die Kraftmaschinen sind Wind- oder Wasserkraftmaschinen (1), jeweils umfassend einen Rotor (2) mit einer Nabe (2.1) und wenigstens einem daran befestigten Rotorblatt (2.2);
1.5 **dadurch gekennzeichnet, dass** das einzelne Rotorblatt (2.2) im Bereich der Rotorblattspitze Endscheiben zum Beeinflussen des das Rotorblatt (2.2) umströmenden Mediums zur gezielten Zunahme der Verwirbelung umfasst.

## Claims

1. Power machine array
1.1 comprising a plurality of power machines, each having a generator (8);
1.2 comprising an electrical network (5), which interconnects the generators (8) of the power machines in order to feed the generated electrical power into a supply network (10); wherein
1.3 the power machines are adjacently arranged in the flow direction of the medium and transversely thereto in order to take energy from the medium simultaneously;
1.4 the power machines are wind or water power machines (1), each comprising a rotor (2) having a hub (2.1) and at least one rotor blade (2.2) fastened thereto;
1.5 **characterized in that** the individual rotor blade (2.2) comprises, in the region of the rotor blade tip, end plates for influencing the medium flowing around the rotor blade (2.2) in order to deliberately increase the turbulence.

## Revendications

1. Parc de machines génératrices d'énergie
1.1 avec un grand nombre de machines génératrices d'énergie présentant chacune un générateur (8) ;
1.2 avec un réseau électrique (5) qui relie les générateurs (8) des machines génératrices d'énergie entre elles pour amener la puissance électrique générée dans un réseau d'alimentation (10),
1.3 dans lequel les machines génératrices d'énergie sont disposées au voisinage les unes des autres dans le sens d'écoulement du fluide et transversalement par rapport à celui-ci afin de capter simultanément l'énergie du fluide ;
1.4 les machines génératrices d'énergie sont des génératrices éoliennes ou hydroliennes (1) comprenant chacune un rotor (2) avec un moyeu (2.1) et au moins une pale de rotor (2.2) fixée à celui-ci,
1.5 **caractérisé en ce que** la pale de rotor unique (2.2) comprend, au niveau de la pointe de la pale, des disques d'extrémité servant à agir sur le fluide qui parcourt la pale de rotor (2.2) de façon à augmenter les turbulences de façon ciblée.
